(19)

Europäisches
Patentamt

European
Patent Office

Office européen
des brevets

(11) **EP 1 750 387 A1**

(12) **EUROPEAN PATENT APPLICATION**

(43) Date of publication:
**07.02.2007 Bulletin 2007/06**

(51) Int Cl.:
*H04L 5/02* (2006.01)     *H04B 1/713* (2006.01)

(21) Application number: **06016130.4**

(22) Date of filing: **02.08.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **02.08.2005 KR 20050070725**

(71) Applicant: **Samsung Electronics Co., Ltd.
Yeongtong-gu
Suwon-si, Gyeonggi-do (KR)**

(72) Inventors:
 • **Cho, Myeon-Gyun
  c/oSamsung Electronics
  Suwon-si
  Gyeonggi-do (KR)**

 • **You, Cheol-Woo
  c/oSamsung Electronics
  Suwon-si
  Gyeonggi-do (KR)**
 • **Kwun, Jong-Hyung
  c/oSamsung Electronics
  Suwon-si
  Gyeonggi-do (KR)**

(74) Representative: **Grünecker, Kinkeldey,
Stockmair & Schwanhäusser
Anwaltssozietät
Maximilianstrasse 58
80538 München (DE)**

(54) **Two-dimensional spreading method for an OFDM-CDM system**

(57)     A transmission apparatus and method for a communication system based on Orthogonal Frequency Division Multiplexing-Code Division Multiplexing (OFDM-CDM). A frequency spreader multiplies symbols to be transmitted by a frequency spreading factor and outputs frequency spread symbols whose number corresponds to the frequency spreading factor. Buffers whose number corresponds to the frequency spreading factor temporarily store the frequency spread symbols in a unit of a predefined number of symbols. A time spreader multiplies parallel frequency spread symbols from the buffers by a time spreading factor and outputs frequency-time spread symbols. An Inverse Fast Fourier Transform (IFFT) processor performs IFFT on the frequency-time spread symbols, and outputs an OFDM symbol. A Guard Interval (GI) inserter inserts a GI into a signal output from the IFFT processor and transmits the signal. The system can obtain complete diversity gain and residual gain due to the effect of a time-varying channel in any channel environment.

FIG.3

EP 1 750 387 A1

**Description**

**BACKGROUND OF THE INVENTION**

1. Field of the Invention

The present invention relates generally to an Orthogonal Frequency Division Multiplexing-Code Division Multiplexing (OFDM-CDM) communication system, and in particular, to a two-dimensional spreading method for OFDM-CDM communications.

2. Description of the Related Art

An important requirement for next-generation wireless communication systems is to increase system capacity and improve link reliability through efficient spectrum management. A method for applying a spread spectrum scheme to an Orthogonal Frequency Division Multiplexing (OFDM) system can improve link reliability by obtaining frequency diversity gain without sacrificing spectral efficiency, consequently an application of the spread spectrum scheme is generalized in the next-generation wireless communication systems. These systems include two types a Multi-Carrier Code Division Multiple Access (MC-CDMA) and a OFDM-Code Division Multiplexing (OFDM-CDM). The MC-CDMA system uses an orthogonal spreading code for user identification, whereas the OFDM-CDM system allocates different frequencies for user identification like an Orthogonal Frequency Division Multiple Access (OFDMA) system and uses an orthogonal spreading code to identify different data of an identical user. Specifically, the OFDM-CDM system utilizes CDM to simultaneously transmit data of an identical user through multiple subcarriers. It is known that the OFDM-CDM system can guarantee the maximum possible frequency diversity by separating assigned subcarriers at frequencies using a frequency interleaver. The OFDM-CDM system is advantageous in that the flexibility is large because it can obtain both multiuser diversity by assigning subcarriers to a user with a good channel like the OFDMA system, as well as frequency diversity using the frequency interleaver like the MC-CDMA system.

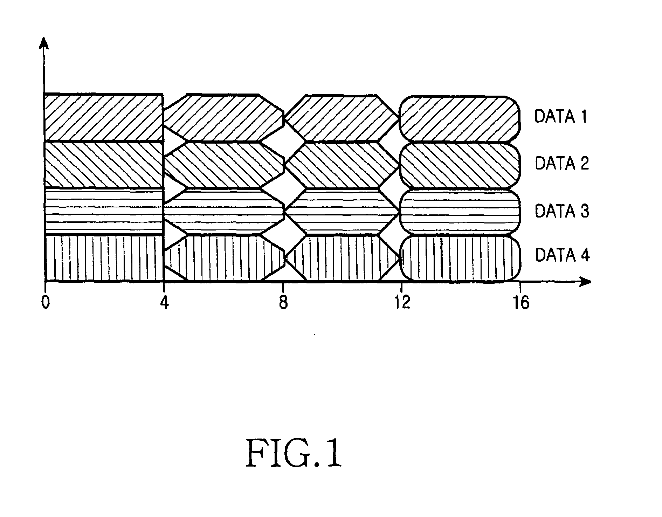

FIG. 1 is a graph illustrating a diversity method of the conventional OFDM-CDM system. Users are multiplexed in Frequency Division Multiplexing (FDM), and data of each user is multiplexed in CDM. In FIG. 1, each user is assigned one subchannel constructed by four subcarriers. According to CDM, four different data elements are transmitted through an assigned subchannel.

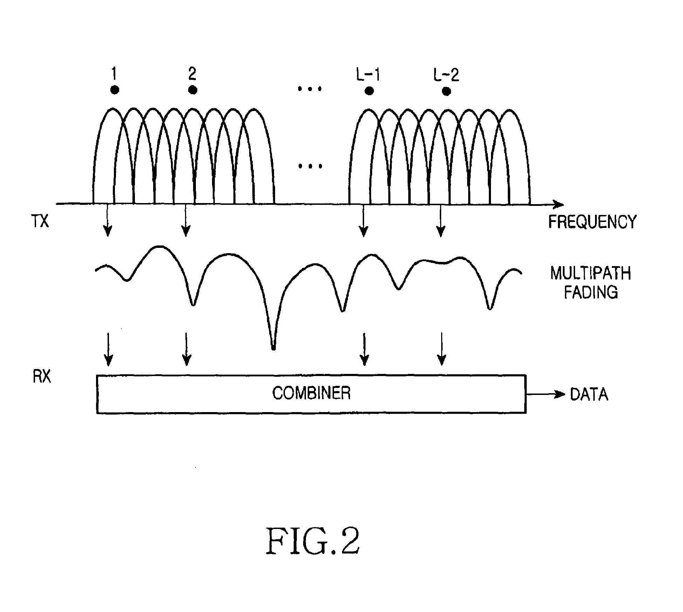

FIG. 2 is a conceptual diagram illustrating frequency interleaving in the conventional OFDM-CDM system. A transmitting side transmits a signal for which a frequency interleaving process has been performed. A receiving side detects the transmitted signal through a Minimum Mean Square Error Combiner (MMSEC), such that fading due to a multipath is overcome. However, the conventional OFDM-CDM system cannot ensure complete frequency diversity when a frequency spreading factor is less than the maximum achievable diversity order capable of being achieved by each user as the number of users increases.

**SUMMARY OF THE INVENTION**

Accordingly, the present invention has been designed to solve the above and other problems occurring in the conventional art. Therefore, it is an object of the present invention to provide a two-dimensional spreading method that can maximize diversity gain regardless of channel environments in an Orthogonal Frequency Division Multiplexing-Code Division Multiplexing (OFDM-CDM) system.

It is another object of the present invention to provide an improved two-dimensional spreading method for an Orthogonal Frequency Division Multiplexing-Code Division Multiplexing (OFDM-CDM) system, and an OFDM-CDM method that can improve system performance through time diversity gain as well as complete frequency diversity gain using a new frequency hopping pattern.

In accordance with an aspect of the present invention, there is provided a transmitter for a communication system based on Orthogonal Frequency Division Multiplexing-Code Division Multiplexing (OFDM-CDM), having a frequency spreader for multiplying symbols to be transmitted by a frequency spreading factor and outputting frequency spread symbols whose number corresponds to the frequency spreading factor; buffers, whose number corresponds to the frequency spreading factor, for temporarily storing the frequency spread symbols in a unit of a predefined number of symbols; a time spreader for multiplying parallel frequency spread symbols output from the buffers by a time spreading factor and outputting parallel frequency-time spread symbols; an Inverse Fast Fourier Transform (IFFT) processor for performing IFFT on the parallel frequency-time spread symbols output from the time spreader, and outputting an OFDM symbol; and a Guard Interval (GI) inserter for inserting a GI into a signal output from the IFFT processor and transmitting the signal.

Preferably, the time spreader includes time spreading modules, mapped to the buffers, for spreading the frequency spread symbols output from the buffers in a time domain. Preferably, the transmitter further includes a frequency hopping unit for performing frequency hopping on the frequency-time spread symbols output from the time spreader.

Preferably, the time spreader includes time spreading modules, mapped to the buffers, for spreading the frequency spread symbols output from the buffers in a time domain; and a frequency hopping unit for performing frequency hopping on the frequency-time spread symbols output from the time spreading modules.

Preferably, the time spreading factor is set to be at least a value computed by dividing a maximum allowable frequency diversity order for each user by the frequency spreading factor. The maximum allowable frequency diversity order is a value computed by dividing a channel bandwidth of the system by a correlation bandwidth.

Preferably, the time spreading factor is set to satisfy a condition of $M \cdot L \geq D_{\max}$, where $M$ is the time spreading factor, $L$ is the frequency spreading factor, and $D_{\max}$ is a maximum allowable frequency diversity order for each user.

In accordance with another aspect of the present invention, there is provided a transmission method for a communication system based on Orthogonal Frequency Division Multiplexing-Code Division Multiplexing (OFDM-CDM), including multiplying symbols to be transmitted by a frequency spreading factor and outputting parallel frequency spread symbols whose number corresponds to the frequency spreading factor; multiplying the frequency spread symbols by a time spreading factor and outputting frequency-time spread symbols; performing Inverse Fast Fourier Transform (IFFT) on the frequency-time spread symbols; and inserting a guard interval into a signal based on the IFFT and transmitting the signal.

## BRIEF DESCRIPTION OF THE DRAWINGS

The above and other objects and aspects of the present invention will be more clearly understood from the following detailed description taken in conjunction with the accompanying drawings, in which:

FIG. 1 is a graph illustrating a diversity method of a conventional Orthogonal Frequency Division Multiplexing-Code Division Multiplexing (OFDM-CDM) system;

FIG. 2 is a conceptual diagram illustrating frequency interleaving in the conventional OFDM-CDM system;

FIG. 3 is a block diagram schematically illustrating a structure of an OFDM-CDM transmitter in accordance with the present invention;

FIG. 4 is a conceptual diagram illustrating a two-dimensional spreading method for OFDM-CDM in accordance with the present invention;

FIG. 5 illustrates a code multiplexing process based on a spreading method for OFDM-CDM in accordance with the present invention;

FIG. 6 illustrates a frequency hopping method for OFDM-CDM time spreading in accordance with the present invention;

FIG. 7 is a graph illustrating the simulation results of a Bit Error Rate (BER) performance comparison between the two-dimensional spreading OFDM-CDM system of the present invention and the conventional frequency interleaving OFDM-CDM system in an incomplete diversity situation; and

FIG. 8 is a graph illustrating the simulation results of a BER performance comparison between the two-dimensional spreading OFDM-CDM system of the present invention and the conventional frequency interleaving OFDM-CDM system in a complete diversity situation.

## DETAILED DESCRIPTION OF THE PREFERRED EMBODIMENTS

A spreading method for Orthogonal Frequency Division Multiplexing-Code Division Multiplexing (OFDM-CDM) in accordance with the present invention will be described in detail herein below with reference to the accompanying drawings.

When the total number of subcarriers is $N$ and the number of users is $N_u$ in an OFDM-CDM system, the number of subcarriers to be allocated to each user, $L$, becomes $N/N_u$. Therefore, $L$ can be less than the maximum allowable frequency diversity order when the number of users, $N_u$, increases. The maximum allowable frequency diversity order is expressed as shown in Equation (1).

$$D_{\max} = \frac{W}{(\Delta f)_c}, \quad (\Delta f)_c \approx \frac{1}{T_m} \qquad \text{Equation (1)}$$

In Equation (1), $W$, $(\Delta f)_c$, and $T_m$ represent the bandwidth, the correlation bandwidth, and the multipath delay spread, respectively. Specifically, the correlation bandwidth $(\Delta f)_c$ is narrow when $T_m$ is long. In this case, because the maximum allowable frequency diversity $D_{max}$ increases, it is difficult for the complete diversity to be expected with respect to the number of subcarriers capable of being allocated, $L$.

In accordance with the present invention, the two-dimensional spreading method can obtain complete diversity gain by restoring lost diversity, i.e., residual diversity, when a spreading factor is less than the maximum frequency diversity order.

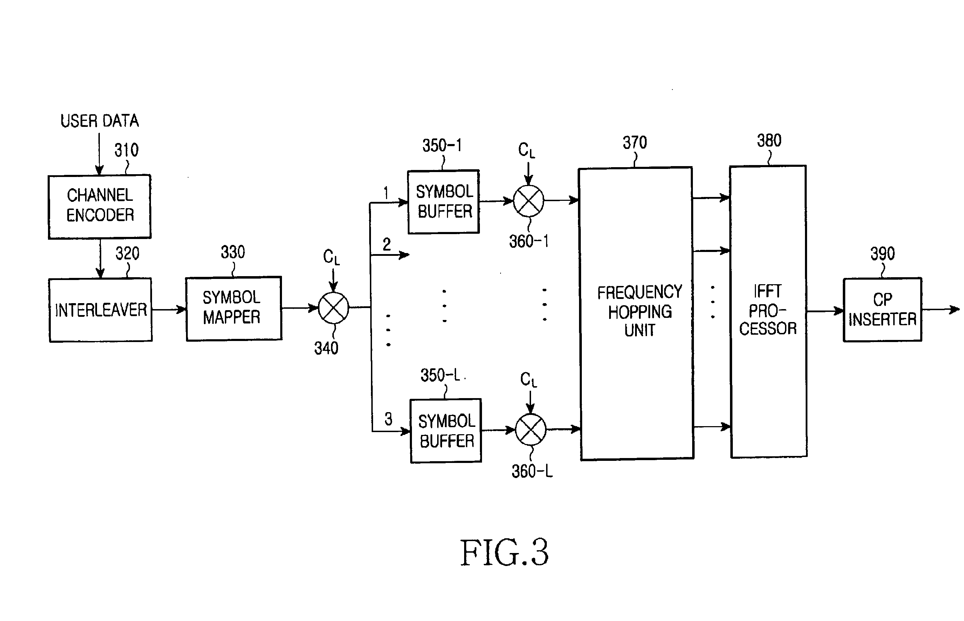

FIG. 3 is a block diagram schematically illustrating a structure of an OFDM-CDM transmitter in accordance with the present invention.

As illustrated in FIG. 3, in accordance with the present invention, the OFDM-CDM transmitter is provided with a channel encoder 310, an interleaver 320, a symbol mapper 330, a frequency spreader 340, $L$ symbol buffers 350-1 ~ 350-L, time spreaders 360-1 ~ 360-L, a frequency hopping unit 370, an Inverse Fast Fourier Transform (IFFT) processor 380, and a Cyclic Prefix (CP) inserter 390. The channel encoder 310 performs channel encoding on input data. The interleaver 320 interleaves a signal stream output from the channel encoder 310. The symbol mapper 330 maps the interleaved signal stream output from the interleaver 320 to symbols. The frequency spreader 340 performs frequency domain spreading by multiplying a symbol stream output from the symbol mapper 330 by a frequency spreading factor based on $C_L$. The $L$ symbol buffers 350-1 ~ 350-L of a size $M$ temporarily store frequency spread symbols output from the frequency spreader 340. The time spreaders 360-1 ~ 360-L mapped to the symbol buffers 350-1 ~ 350-L perform time domain spreading by multiplying symbols output from the symbol buffers 350-1 ~ 350-L by a time spreading factor based on $C_M$. The frequency hopping unit 370 performs frequency hopping on time spread symbols output from the time spreaders 360-1 ~ 360-L. The IFFT processor 380 transforms parallel frequency-hopped symbols output from the frequency hopping unit 370 according to an IFFT process and outputs an OFDM symbol. The CP inserter 390 inserts a CP into the OFDM symbol output from the IFFT processor 380.

Next, the two-dimensional spreading method for the OFDM-CDM system of the above-described structure in accordance with the present invention will be described.

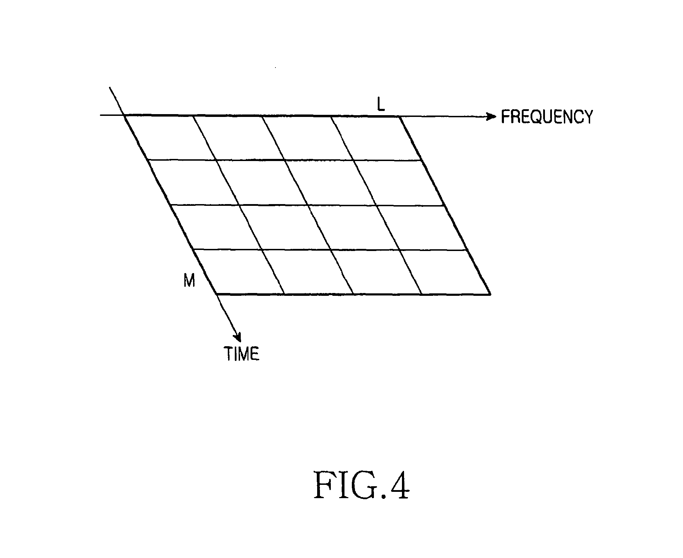

FIG. 4 is a conceptual diagram illustrating a two-dimensional spreading method for OFDM-CDM in accordance with the present invention. The two-dimensional spreading method ensures a sufficient number of subcarriers for complete diversity by applying time spreading to OFDM-CDM.

For example, when the maximum allowable frequency diversity order $D_{max}$ for each user is 8, the total number of subcarriers, $N$, is 16, and the number of users, $N_u$, is 8, the number of subcarriers to be allocated to each user, $L$, is 2. The maximum allowable frequency diversity order $D_{max}$ for each user is 8, but only two subcarriers can be allocated, hence, unused residual diversity is present. In this case, time spreading is preformed by multiplying the time spreading factor $M$ of 4 by two subcarriers allocated to each user, such that complete diversity gain can be obtained using the residual diversity.

It is preferred that a $(M{\cdot}L)$ value computed by multiplying the time spreading factor $M$ by the number of subcarriers for each user, $L$, is equal to or more than the maximum allowable frequency diversity order $D_{max}$. When $M{\cdot}L > D_{max}$, additional diversity gain can be expected.

An OFDM-CDM symbol stream of an $i$-th user is buffered in $L$ symbol registers with a size $M$. $M$ OFDM-CDM symbols of the i-th user to be successively transmitted through an $l$-th subcarrier are multiplexed into a time domain spreading code matrix $C_M$. Using the above-described method, a transmitter performs a time spreading operation.

A time spread output of the $l$-th subcarrier of the $i$-th user can be expressed as shown in Equation (2).

$$\bar{x}_l^i = \left[ s_l^i(n), \cdots, s_l^i(n+M-1) \right] \cdot C_M = \bar{s}_l^{(i)} \cdot C_M \qquad \text{Equation (2)}$$

In Equation (2), $\bar{s}_l^{(i)}$ is a row vector indicating $M$ buffered data elements to be transmitted through the $l$-th subcarrier of the i-th user, and $n$ is a time index of the row vector.

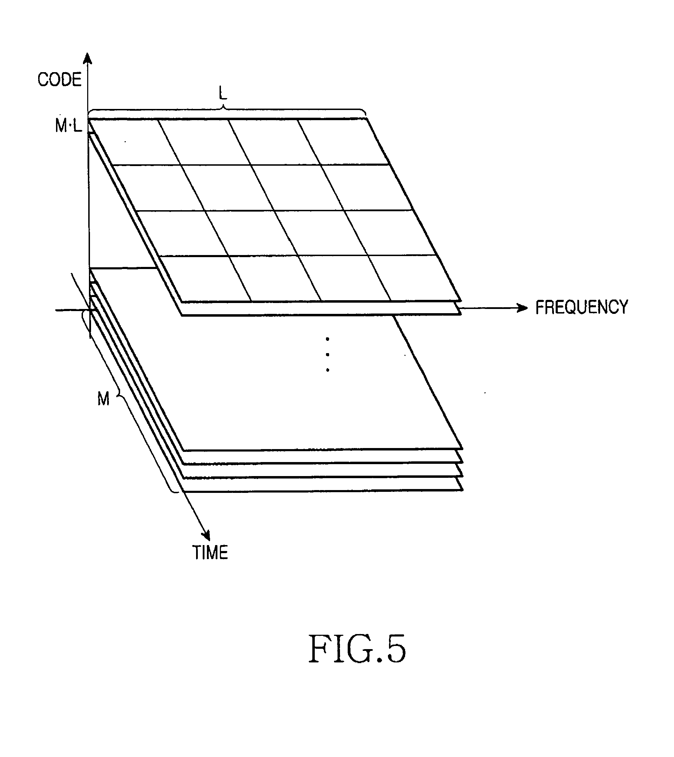

FIG. 5 illustrates a code multiplexing process based on a spreading method for OFDM-CDM in accordance with the present invention. $(M \cdot L)$ data symbols are multiplexed according to code multiplexing and the multiplexed data symbols are transmitted through $M$ successive OFDM symbols.

After time spreading, time spread signals are mapped to allocated subcarriers. For a frequency mapping operation, an input vector of the i-th user is expressed as shown in Equation (3).

$$\underline{x}_m^{(i)} = \left[x_{1m}^{(i)}, x_{2m}^{(i)}, \cdots, x_{Lm}^{(i)}\right]^T, \quad m = 1, 2, \cdots, M \qquad \text{Equation (3)}$$

In Equation (3), $\underline{x}_{Lm}^{(i)}$ is a symbol element to be transmitted through the $l$-th subcarrier of the $i$-th user in an $M$-th OFDM symbol.

In the present invention, two frequency mapping schemes are used for time spread signals. Considering $M$ successive OFDM symbols in one group of symbols to be transmitted, an $l$-th transmission Subcarrier Index (SI) of the $i$-th user in an $m$-$th$ OFDM symbol in a Frequency-Fixed (FF) mapping scheme is given as shown in Equation (4).

$$SI_{l,m}^{(i)} = FF_{l,m}^{(i)} = N_U(l-1) + i \qquad \text{Equation (4)}$$

On the other hand, a transmission SI in a Frequency-Hopped (FH) mapping scheme is given as shown in Equation (5).

$$SI_{l,m}^{(i)} = FH_{l,m}^{(i)} = \mathrm{mod}(N_U(l-1) + i + \frac{N_U}{M}(m-1), N) \qquad \text{Equation (5)}$$

In Equation (5), $i=1,2,\cdots,N_U$, $l=1,2,\cdots,L$, $m=1,2,\cdots,M$, and mod represents a modulo-N operation.

Time spread symbols experience almost the same channel response in a slow time-varying channel in a Frequency-Fixed Time Spreading (FF-TS) scheme, thus only small time diversity gain can be obtained. On the other hand, a Frequency-Hopped Time Spreading (FH-TS) scheme can obtain residual frequency diversity gain as well as time diversity gain in slow fading, because time spread subcarriers are forced to experience different channel characteristics in the FH mapping scheme.

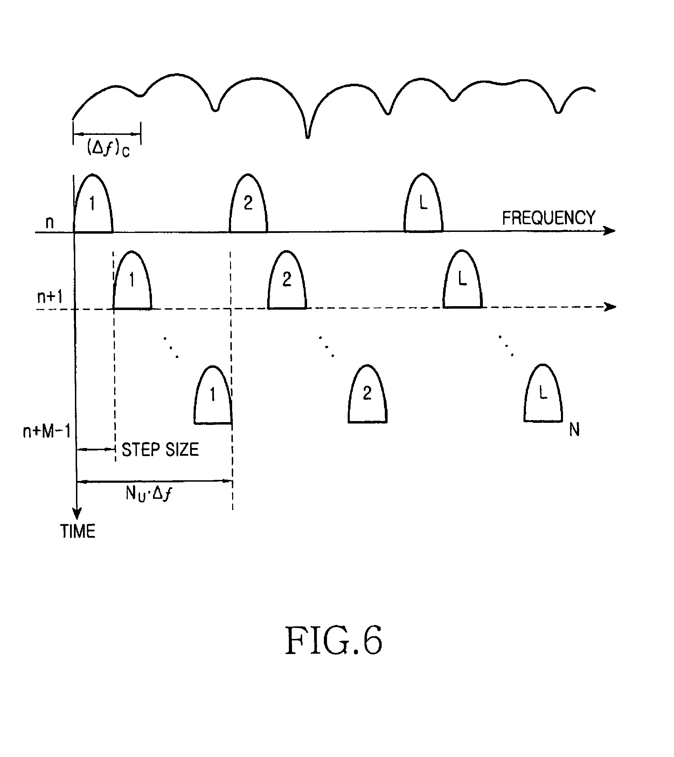

FIG. 6 illustrates a frequency hopping method for OFDM-CDM time spreading in accordance with the present invention. As illustrated in FIG. 6, subcarriers to be spread in the frequency domain are allocated at a far distance, i.e.,

$N_U = \dfrac{N}{L}$, if possible. Subcarriers to be spread in the time domain hop to $N_U - \dfrac{N_U}{M}$ in the right direction on the basis of a step size of $\dfrac{N_U}{M}$ in a time index $n$. The FH mapping scheme guarantees frequency diversity of $M \cdot L$ according

to the given number of subcarriers, $L$, for each user such that the allocated subcarriers completely have frequency selective channel characteristics.

To obtain complete frequency diversity gain, the time domain spreading factor $M$ must be set as shown in Equation (6).

$$M = \min\left\{2^n \middle| 2^n > \frac{N_U \cdot \Delta f}{(\Delta f)_c}\right\}, \quad n = 0, 1, 2, \cdots \qquad \text{Equation (6)}$$

In Equation (6), $\Delta f$ is a distance between tones in the OFDM system. In this embodiment, a Walsh-Hadamard code is applied as a spreading code. Accordingly, $M$ must be the power of 2.

As described above, a sufficient number of subcarriers can be obtained which are more than the maximum achievable diversity order $D_{\max}$ through two-dimensional spreading on data symbols of $M \cdot L$ subcarriers. When the time domain spreading factor $M$ is set as shown in Equation (6), the maximum frequency diversity gain as well as the time diversity can be obtained in the fast-fading channel. At the time of actual implementation, it is preferred that the spreading factor $M$ is set to be a minimum value such that $D_{max}$ can be obtained. Thus, an output vector of frequency hopping for one symbol group can be expressed as shown in Equation (7).

$$\underline{z}_m^{(i)} = SI_{l,m}^{(i)}\left\{\underline{x}_m^{(i)}\right\} = \left[z_{1m}^{(i)}, z_{2m}^{i}, \cdots, z_{Lm}^{(i)}\right]^T \qquad \text{Equation (7)}$$

In Equation (7), m =1,2,···,$M$. A guard interval (GI) is inserted into a frequency-hopped signal after IFFT.

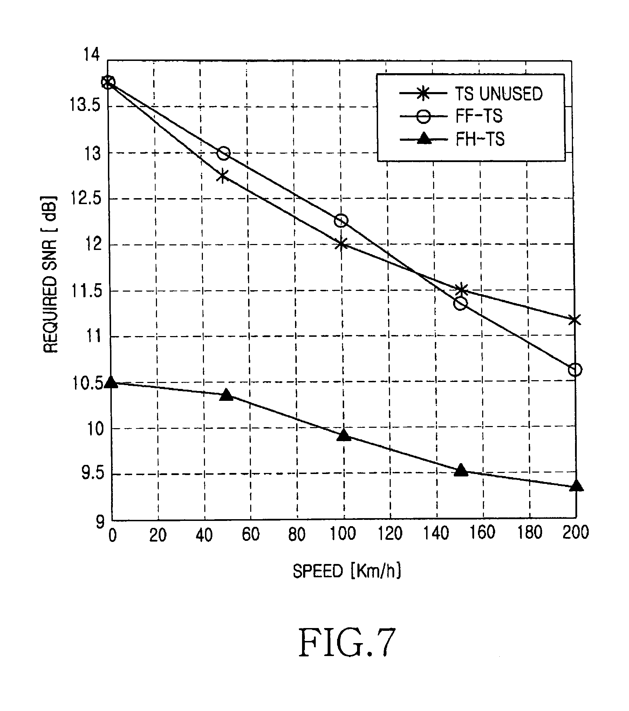

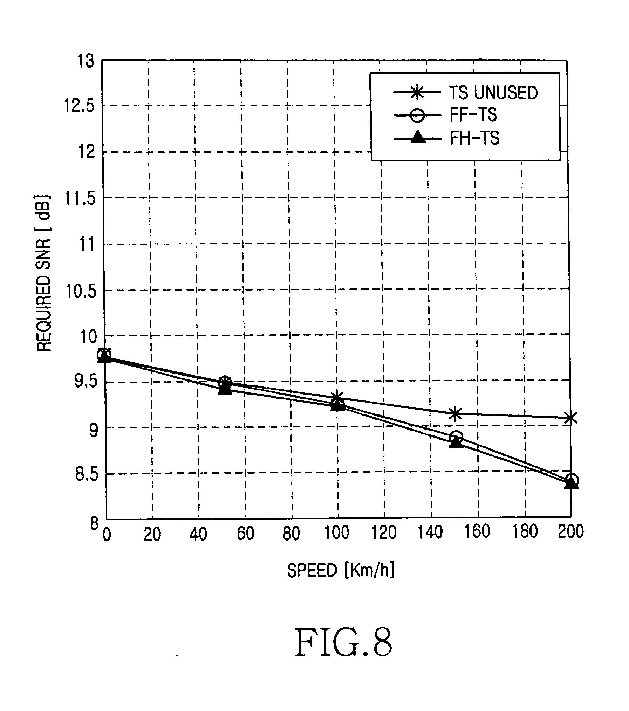

FIGS. 7 and 8 are graphs illustrating the simulation results of a Bit Error Rate (BER) performance comparison between the two-dimensional spreading OFDM-CDM system of the present invention and the conventional frequency interleaving OFDM-CDM system.

The simulations are performed under consideration of a Rayleigh fading channel with 10 multipaths and various Doppler frequencies such that there are reflected different mobile environments based on a downlink OFDM-CDM system in which the number of subcarriers is 512, a GI is 32, and a bandwidth is 2 MHz. The maximum achievable frequency diversity order is 10 and frequency spreading factors $L$ for complete and incomplete frequency diversity environments are set to 16 and 4, respectively. Minimum Mean Square Error Combining (MMSEC) is applied to a receiver to guarantee orthogonality between multiplexed data. A channel code uses a conventional code for which a memory size is 3 and a code rate R = ½. $N_U (= \dfrac{N}{L})$ users are present and an identical data rate is applied between the users.

FIG. 7 is a graph illustrating a Signal-to-Noise Ratio (SNR) comparison between the two-dimensional spreading OFDM-CDM methods of the present invention and the conventional frequency interleaving OFDM-CDM method in an incomplete diversity situation when the frequency spreading factor $L$ is set to 4 to obtain a BER = $10^{-3}$.

The simulations are performed while giving a change in a mobile speed to measure the effect of time spreading. In accordance with the present invention, the time domain spreading factor $M$ is set to 4 in the two-dimensional OFDM-CDM methods. It can be seen that gain of the OFDM-CDM method based on FH-TS in accordance with the present invention is at least 3 dB more than those of the OFDM-CDM method based on FF-TS and the conventional OFDM-CDM method in a time-varying channel, because time spread subcarriers are forced to experience different channel characteristics in the OFDM-CDM method based on FH-TS.

It can be seen that both the OFDM-CDM method based on FF-TS and the conventional OFDM-CDM based on channel coding can obtain gain due to time diversity increased by channel coding as the mobile speed increases. The OFDM-CDM method based on FH-TS can obtain residual frequency diversity as well as time diversity at a high rate according to the HF mapping, thus, it outperforms the OFDM-CDM method based on FF-TS as well as the conventional OFDM-CDM method.

FIG. 8 is a graph illustrating an SNR comparison between the two-dimensional spreading OFDM-CDM system of the present invention and the conventional frequency interleaving OFDM-CDM system in a complete diversity situation when the frequency spreading factor $L$ is set to 16 to obtain a BER = $10^{-3}$.

In this case, because the frequency spreading factor is sufficient to obtain the maximum frequency diversity order ($D_{max}$ =10), residual frequency diversity gain is absent. In a movement-free environment, the proposed two-dimensional spreading OFDM-CDM methods and the conventional frequency interleaving OFDM-CDM method have almost the same performance. The two-dimensional OFDM-CDM methods of the present invention have slightly higher gain than the conventional OFDM-CDM method according to a two-dimensional combination. In FIG. 8 unlike FIG. 7, the complete frequency diversity can be obtained by a sufficient frequency spreading factor. In this case, because frequency hopping for obtaining residual frequency diversity is ineffective, the OFDM-CDM method based on FH-TS does not give higher gain than the OFDM-CDM method based on FF-TS.

However, $L$ is selected as a value of less than the maximum frequency diversity order $D_{max}$ as the number of users increases, therefore, the FH-TS scheme is required to obtain residual frequency diversity.

From the simulation results as illustrated in FIGS. 7 and 8, the OFDM-CDM method based on FH-TS in accordance with the present invention significantly outperforms the conventional OFDM-CDM method when the frequency spreading factor is sufficiently large or in all the other cases.

In other words, the OFDM-CDM method based on FH-TS in accordance with the present invention can obtain complete frequency-time diversity gain by applying FH-TS, regardless of a channel environment.

As described above, the OFDM-CDM method of the present invention applies frequency spreading and time spreading to a transmission signal, thereby obtaining complete diversity gain even when the number of subcarriers is less than the maximum allowable frequency diversity order.

Moreover, the OFDM-CDM method of the present invention maps a signal spread in the frequency and time domains to an OFDM symbol according to a predefined frequency hopping pattern, thereby obtaining the effect of a time-varying channel as well as complete diversity gain.

While the invention has been shown and described with reference to a certain preferred embodiment thereof, it will be understood by those skilled in the art that various changes in form and details may be made therein without departing from the spirit and scope of the invention as defined by the appended claims.

**Claims**

1. A transmitter for a communication system based on Orthogonal Frequency Division Multiplexing-Code Division Multiplexing (OFDM-CDM), comprising:

    a frequency spreader for multiplying symbols to be transmitted by a frequency spreading factor and outputting frequency spread symbols whose number corresponds to the frequency spreading factor;
    buffers, whose number corresponds to the frequency spreading factor, for temporarily storing the frequency spread symbols in a unit of a predefined number of symbols;
    a time spreader for multiplying parallel frequency spread symbols output from the buffers by a time spreading factor and outputting parallel frequency-time spread symbols;
    an Inverse Fast Fourier Transform (IFFT) processor for performing IFFT on the parallel frequency-time spread symbols output from the time spreader, and outputting an OFDM symbol; and
    a Guard Interval (GI) inserter for inserting a GI into a signal output from the IFFT processor and transmitting the signal.

2. The transmitter of claim 1, wherein the time spreader comprises:

    time spreading modules, mapped to the buffers, for spreading the frequency spread symbols output from the buffers in a time domain.

3. The transmitter of claim 1, further comprising:

    a frequency hopping unit for performing frequency hopping on the frequency-time spread symbols output from the time spreader.

4. The transmitter of claim 1, wherein the time spreader comprises:

    time spreading modules, mapped to the buffers, for spreading the frequency spread symbols output from the buffers in a time domain; and
    a frequency hopping unit for performing frequency hopping on the frequency-time spread symbols output from the time spreading modules.

5. The transmitter of claim 1, wherein the time spreading factor is set to be greater than or equal to a value computed by dividing a maximum allowable frequency diversity order for each user by the frequency spreading factor, the maximum allowable frequency diversity order corresponding to a value computed by dividing a channel bandwidth of the system by a correlation bandwidth.

6. The transmitter of claim 1, wherein the time spreading factor is set to satisfy a condition of $M \cdot L \geq D_{max}$, where $M$ is the time spreading factor, $L$ is the frequency spreading factor, and $D_{max}$ is a maximum allowable frequency diversity order for each user.

7. A transmission method for a communication system based on Orthogonal Frequency Division Multiplexing-Code Division Multiplexing (OFDM-CDM), comprising the steps of:

    multiplying symbols to be transmitted by a frequency spreading factor and outputting parallel frequency spread symbols whose number corresponds to the frequency spreading factor;
    multiplying the frequency spread symbols by a time spreading factor and outputting frequency-time spread symbols;

performing Inverse Fast Fourier Transform (IFFT) on the frequency-time spread symbols; and
inserting a guard interval into a signal based on the IFFT and transmitting the signal.

8. The transmission method of claim 7, further comprising :

    performing frequency hopping before the IFFT on the frequency-time spread symbols.

9. The transmission method of claim 7, wherein the time spreading factor is set to be greater than or equal to a value computed by dividing a maximum allowable frequency diversity order for each user by the frequency spreading factor.

10. The transmission method of claim 9, wherein the maximum allowable frequency diversity order is a value computed by dividing a channel bandwidth of the system by a correlation bandwidth.

11. The transmission method of claim 7, wherein the time spreading factor is set to satisfy a condition of $M \cdot L \geq D_{max}$, where $M$ is the time spreading factor, $L$ is the frequency spreading factor, and $D_{max}$ is a maximum allowable frequency diversity order for each user.

FIG.1

FIG.2

FIG.3

FIG.4

FIG.5

FIG.6

FIG.7

FIG.8

**European Patent Office**

**EUROPEAN SEARCH REPORT**

Application Number

EP 06 01 6130

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MYEONGYUN CHO ET AL: "A novel time spreading method for down-link OFDM-code division multiplexing systems" VEHICULAR TECHNOLOGY CONFERENCE, 2004. VTC2004-FALL. 2004 IEEE 60TH LOS ANGELES, CA, USA 26-29 SEPT. 2004, PISCATAWAY, NJ, USA,IEEE, 26 September 2004 (2004-09-26), pages 1845-1848, XP010786956 ISBN: 0-7803-8521-7 * the whole document * ----- | 1-11 | INV. H04L5/02 H04B1/713 |
| A | EP 1 179 904 A1 (MATSUSHITA ELECTRIC IND CO LTD [JP]) 13 February 2002 (2002-02-13) * paragraphs [0019] - [0026], [0043], [0060]; figure 17 * ----- | 1-11 | |

| TECHNICAL FIELDS SEARCHED (IPC) |
|---|
| H04L H04B |

The present search report has been drawn up for all claims

| Place of search | Date of completion of the search | Examiner |
|---|---|---|
| Munich | 21 November 2006 | Giglietto, Massimo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 01 6130

This annex lists the patent family members relating to the patent documents cited in the above-mentioned European search report.
The members are as contained in the European Patent Office EDP file on
The European Patent Office is in no way liable for these particulars which are merely given for the purpose of information.

21-11-2006

| Patent document cited in search report | Publication date | Patent family member(s) | Publication date |
|---|---|---|---|
| EP 1179904 A1 | 13-02-2002 | AU 3954201 A<br>CN 1364358 A<br>WO 0169826 A1<br>US 2002159425 A1 | 24-09-2001<br>14-08-2002<br>20-09-2001<br>31-10-2002 |

For more details about this annex : see Official Journal of the European Patent Office, No. 12/82